# EUROPEAN PATENT APPLICATION

(11) **EP 4 796 775 A1**
(43) Date of publication of application: **26.08.2026**
(21) Application number: 25159165.7
(22) Date of filing: 20.02.2025
(51) Int. Cl.: F02D 41/30, F02D 19/06, F02D 37/02, F02D 41/00, F02D 41/32, F02D 41/38

(54) **A FUEL INJECTION SYSTEM FOR AN INTERNAL COMBUSTION ENGINE OF A VEHICLE AND A FUEL INJECTION METHOD**

(71) Applicant: VOLVO TRUCK CORPORATION, 405 08 Göteborg (SE)
(72) Inventor: Morén, Mats, 423 61 Torslanda (SE); Persson, Håkan, 423 59 Torslanda (SE); Babayev, Rafig, 414 78 Göteborg (SE)
(74) Representative: Lavoix

(57) **Abstract**

A fuel injection system (45), for an internal combustion engine, the fuel injection system comprising a first fuel injector (50), connected to a high-pressure fuel source (53), a second fuel injector (55), connected to a low-pressure fuel source (57), an intake pre-chamber (60), receiving fuel injected by the fuel injectors, an intake nozzle (65), receiving fuel from the intake pre-chamber and injecting said fuel in a combustion chamber (20), a spark plug (70) positioned inside the pre-chamber and configured for igniting the fuel injected by the fuel injectors, and a controller, connected to the fuel injectors, for controlling a fuel injection by the first fuel injector into the intake pre-chamber and a fuel injection by the second fuel injector into the intake pre-chamber, as a function of a requested torque for the internal combustion engine and as a function of an availability of fuel at the fuel sources.

## Description

### TECHNICAL FIELD

The disclosure relates generally to vehicles with internal combustion engine. In particular aspects, the disclosure relates to a fuel injection system for an internal combustion engine of a vehicle and a fuel injection method. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For internal combustion engines fueled with hydrogen, it is known that the efficiency and the power are improved when the hydrogen fuel is supplied at high pressure, such as over 300 bars, enabling that the fuel injected in the combustion chamber is auto-ignited in a diffusion flame type ignition. In contrast, injection of pre-mixed hydrogen at lower pressure in the combustion chamber, ignited by a spark plug, is less efficient and also implies that a mix of air and hydrogen with high ignitability is present before ignition. Vehicles using an internal combustion engine and which comprise pressurized fuel tanks that are able to provide the internal combustion engine with hydrogen at high pressure when the tanks are full. Nevertheless, as fuel is consumed by the engine, the fuel pressure in the tanks decreases, down to a pressure value, such as below 250-300 bars, where high efficient diffusion flame with combustion CA50 close to maximum efficiency at high compression ratio is not possible anymore. CA50 is an angle value reached by the crankshaft when 50% of the mass of the injected fuel was burned. In this case, the leftover fuel in the tanks cannot be used. To cope with this issue, a few vehicles comprise a compressor to keep the fuel pressure high enough even when little fuel is still available in the tanks. This solution is however costly, takes up space in the vehicle and decreases the overall efficiency of the vehicle, since the compressor also consumes energy to work. Therefore, the present disclosure aims to obtain a fuel injection system enabling high efficiency and emptying of the tanks with reduced needs for a compressor.

### SUMMARY

According to a first aspect of the disclosure, a fuel injection system, for an internal combustion engine, the fuel injection system comprising:
- a first fuel injector, configured to be connected to a high-pressure fuel source,
- a second fuel injector, configured to be connected to a low-pressure fuel source,
- an intake pre-chamber, configured to receive fuel injected by the first fuel injector and fuel injected by the second fuel injector,
- an intake nozzle, configured to receive fuel from the intake pre-chamber and to inject said fuel in a combustion chamber of the internal combustion engine,
- a spark plug positioned inside the pre-chamber and configured for igniting the fuel injected by the first fuel injector or second fuel injector, and
- a controller, connected to the first fuel injector, to the second fuel injector and to the spark plug, for controlling a fuel injection by the first fuel injector into the intake pre-chamber, a fuel injection by the second fuel injector into the intake pre-chamber, and the spark plug, as a function of a requested torque for the internal combustion engine and as a function of an availability of fuel at the high-pressure fuel source and the low-pressure fuel source.

The first aspect of the disclosure may seek to using internal combustion engine supplied with gaseous fuel at high efficiency and emptying of the gaseous fuel reservoirs. A technical benefit may include saving high-pressure fuel from the high-pressure fuel source when the requested torque is in a low load range, by using fuel from the low-pressure fuel source.

Optionally in some examples, including in at least one preferred example, in controlling, the controller is configured so that when the requested torque is in a medium load range and fuel is available at the high-pressure fuel source and at the low-pressure fuel source, a ratio of the fuel injection by the first fuel injector over the fuel injection of the second fuel injector is a function of the requested torque, the higher the requested torque, the higher the ratio. A technical benefit may include saving high-pressure fuel from the high-pressure fuel source when the requested torque is in a medium load range by prioritizing the low-pressure fuel source over the high-pressure fuel source when advantageous.

Optionally in some examples, including in at least one preferred example, in controlling, the controller is configured so that:
- when the requested torque is in a high load range and fuel is available at the high-pressure fuel source, fuel is injected from the first fuel injector in a power quantity while no fuel or a pre-igniting quantity of fuel is injected by the second fuel injector; and
- when the requested torque is in a low load range and fuel is available at the low-pressure fuel source, fuel is injected from the second fuel injector in a power quantity while no fuel is injected by the first fuel injector.

A technical benefit may include optimizing the use of the fuel from the low-pressure fuel source and the fuel from the high-pressure fuel source for high efficiency and enable emptying of the gaseous fuel reservoir. Indeed, when a high quantity of fuel is required, i.e. at high load, high pressure is used so that the efficiency is maximized. In contrast, at low load where less fuel is required, a less efficient combustion is tolerated by powering the engine with low pressure fuel, not only for saving high pressure fuel for later use, but also for depleting low pressure fuel from the low pressure source.

Optionally in some examples, including in at least one preferred example, in controlling, the controller is configured so that, when the torque request is in the high load range and fuel is available at the high-pressure fuel source, the fuel injected by the first fuel injector is injected at an end of a compression stroke of the internal combustion engine. A technical benefit may include optimizing the use of the fuel from the high-pressure fuel source for high efficiency. Indeed, fuel at high pressure is injected in the intake pre-chamber when the conditions are optimal for the ignition of fuel so that all the energy released by the ignition of the fuel is used for powering the engine.

Optionally in some examples, including in at least one preferred example, in controlling, the controller is configured so that, when the torque request is in the low load range and fuel is available at the low-pressure fuel source, the fuel injected by the second fuel injector is injected during an intake stroke or at the beginning of a compression stroke of the internal combustion engine and the spark plug ignites the fuel at the end of the compression stroke of the internal combustion engine. A technical benefit may include optimizing the use of the fuel from the low-pressure fuel source. Indeed, fuel at low pressure is injected during an intake stroke or at the beginning of a compression stroke so that the fuel is compressed during the compression stroke to increase the potential energy released by the ignition of the fluid injected at a low pressure.

Optionally in some examples, including in at least one preferred example, the fuel injection system further comprises several gaseous fuel reservoirs, for feeding the high-pressure fuel source and the low-pressure fuel source with fuel. Optionally, in some examples, including in at least one preferred example, the fuel injection system comprises a fuel distributor, connected to the gaseous fuel reservoirs, the high-pressure fuel source and the low-pressure fuel source, for distributing fuel from the gaseous fuel reservoirs to the high-pressure fuel source and the low-pressure fuel source, so that:
- each gaseous fuel reservoir, among the gaseous fuel reservoirs, which contains gaseous fuel at a pressure over a predetermined pressure threshold, feeds fuel to the high-pressure fuel source via the distributor; and
- each gaseous fuel reservoir, among the gaseous fuel reservoirs, which contains gaseous fuel at a pressure under the predetermined pressure threshold, feeds fuel to the low-pressure fuel source via the distributor.

A technical benefit may include that some of the tanks may be kept at high pressure while others are emptied, so that the high pressure source may be fed for high efficiency at high load, while, at low load, prioritizing emptying of tanks for improving autonomy of the vehicle. Thereby the use of the gaseous fuel is optimized in terms of efficiency and autonomy.

Optionally in some examples, including in at least one preferred example, the pressure threshold is comprised between 250 and 320 bar. A technical benefit may include ensuring that the fuel supplied at high pressure can be ignited in a diffusion flame type of ignition of the fuel, enabling the highest efficiency of the combustion.

Optionally in some examples, including in at least one preferred example, the gaseous fuel reservoirs are hydrogen reservoirs. A technical benefit may include that, using hydrogen tanks implies that, when the tank is full, the hydrogen may be stored at a pressure sufficient for enabling high efficiency combustion, .e.g. diffusion flame, by injection at the first fuel injector without relying on an embedded compressor, although hydrogen needs a relatively high pressure to achieve such a high efficiency combustion, contrary to other types of fuels. In turn, the fuel injection system enables emptying the hydrogen tanks by injecting low pressure hydrogen during working of the engine.

According to a second aspect of the disclosure, an internal combustion engine, comprising :
- the fuel injection system as defined above,
- a combustion chamber, wherein the intake nozzle opens into the combustion chamber for injecting fuel from the intake pre-chamber into the combustion chamber, and
- a piston, mounted in the combustion chamber and configured to reciprocate with respect to the combustion chamber.

The second aspect of the disclosure may seek to using internal combustion engine supplied with gaseous fuel at high efficiency and emptying of the gaseous fuel reservoir. A technical benefit may include saving pressure from the high-pressure fuel source when the requested torque is in a low load range by using fuel from the low-pressure fuel source.

According to a third aspect of the disclosure, a vehicle, comprising an internal combustion engine as defined above. The third aspect of the disclosure may seek to using internal combustion engine supplied with gaseous fuel at high efficiency and emptying of the gaseous fuel reservoir. A technical benefit may include saving pressure from the high-pressure fuel source when the requested torque is in a low load range by using fuel from the low-pressure fuel source.

According to a fourth aspect of the disclosure, a fuel injection method, implemented by the fuel injection system as defined above, the fuel injection method comprising by means of the controller, controlling a fuel injection by the first fuel injector into the intake pre-chamber and a fuel injection by the second fuel injector into the intake pre-chamber and the fuel ignition by the spark plug, as a function of a requested torque for the internal combustion engine and as a function of the availability of fuel at the high-pressure source and at the low-pressure fuel source. The fourth aspect of the disclosure may seek to using internal combustion engine supplied with gaseous fuel at high efficiency and emptying of the gaseous fuel reservoir. A technical benefit may include saving pressure from the high-pressure fuel source when the requested torque is in a low load range by using fuel from the low-pressure fuel source.

Optionally in some examples, including in at least one preferred example, controlling comprises that, when the requested torque is in a medium load range and fuel is available at the high-pressure fuel source and the low-pressure fuel source, a ratio of the fuel injection by the first fuel injector over the fuel injection of the second fuel injector is a function of the requested torque, the higher the requested torque, the higher the ratio. A technical benefit may include saving pressure from the high-pressure fuel source when the requested torque is in a medium load range by deputizing high-pressure fuel source with low-pressure fuel source.

Optionally in some examples, including in at least one preferred example, controlling comprises that:
- when the requested torque is in a high load range and fuel is available at the high-pressure fuel source, fuel is injected from the first fuel injector in the power quantity while no fuel or the pre-igniting quantity of fuel is injected by the second fuel injector; and
- when the requested torque is in a low load range and fuel is available at the low-pressure fuel source, fuel is injected from the second fuel injector in the power quantity while no fuel is injected by the first fuel injector.

A technical benefit may include optimizing the use of the fuel from the low-pressure fuel source and the fuel from the high-pressure fuel source for high efficiency and enable emptying of the gaseous fuel reservoir. Indeed, when a high quantity of fuel is required, i.e. at high load, high pressure is used so that the efficiency is maximized. In contrast, at low load where less fuel is required, a less efficient combustion is tolerated by powering the engine with low pressure fuel, not only for saving high pressure fuel for later use, but also for depleting low pressure fuel from the low pressure source.

Optionally in some examples, including in at least one preferred example, controlling comprises that when the torque request is in the high load range and fuel is available at the high-pressure fuel source, the fuel injected by the first fuel injector is injected at the end of the compression stroke of the internal combustion engine. A technical benefit may include optimizing the use of the fuel from the high-pressure fuel source for high efficiency. Indeed, fuel at high pressure is injected in the intake pre-chamber when the conditions are optimal for the ignition of fuel so that all the energy released by the ignition of the fuel is used for powering the engine.

Optionally in some examples, including in at least one preferred example, controlling comprises that, when the torque request is in the low load range and fuel is available at the low-pressure fuel source, the fuel injected by the second fuel injector is injected during the intake stroke or at the beginning of a compression stroke of the internal combustion engine and the spark plug ignites the fuel at the end of the compression stroke of the internal combustion engine. A technical benefit may include optimizing the use of the fuel from the low-pressure fuel source. Indeed, fuel at low pressure is injected during an intake stroke or at the beginning of a compression stroke so that the fuel is compressed during the compression stroke to increase the potential energy released by the ignition of the fluid injected at a low pressure.

Optionally in some examples, including in at least one preferred example, the method comprises distributing fuel from the gaseous fuel reservoirs to the high-pressure fuel source and to the low-pressure fuel source by means of the distributor, so that:
- each gaseous fuel reservoir, among the gaseous fuel reservoirs, which contains gaseous fuel at a pressure over the predetermined pressure threshold, feeds fuel to the high-pressure fuel source via the distributor; and
- each gaseous fuel reservoir, among the gaseous fuel reservoirs, which contains gaseous fuel at a pressure under the predetermined pressure threshold, feeds fuel to the low-pressure fuel source via the distributor.

A technical benefit may include that some of the tanks may be kept at high pressure while others are emptied, so that the high pressure source may be fed for high efficiency at high load, while, at low load, prioritizing emptying of tanks for improving autonomy of the vehicle. Thereby the use of the gaseous fuel is optimized in terms of efficiency and autonomy.

The disclosed aspects, examples, and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** depicts a vehicle according to the invention.

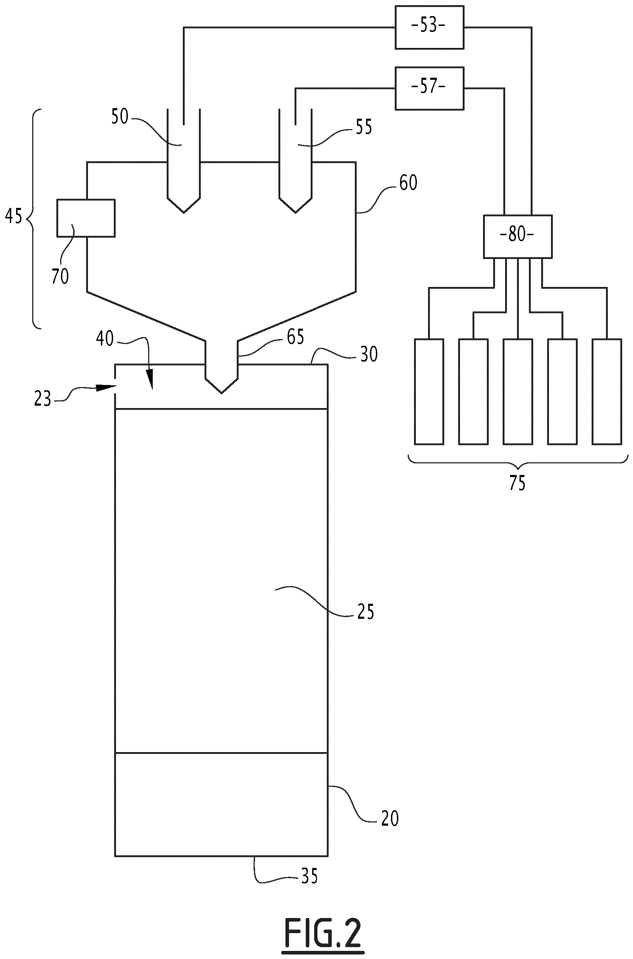

**FIG. 2** is a schematic view of a combustion chamber, a piston and a fuel injection system for an internal combustion engine of the vehicle of figure 1.

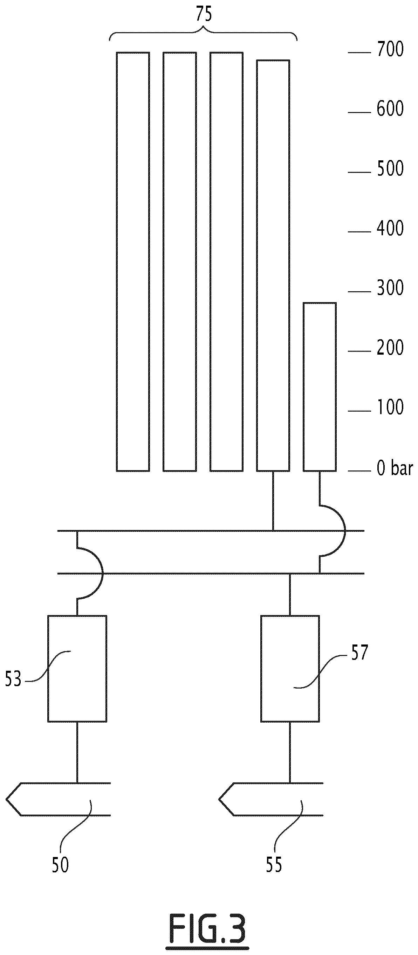

**FIG. 3** is a schematic view of the fuel injection system of figure 2.

### DETAILED DESCRIPTION

The detailed description set forth below provides information and examples of the disclosed technology with sufficient detail to enable those skilled in the art to practice the disclosure.

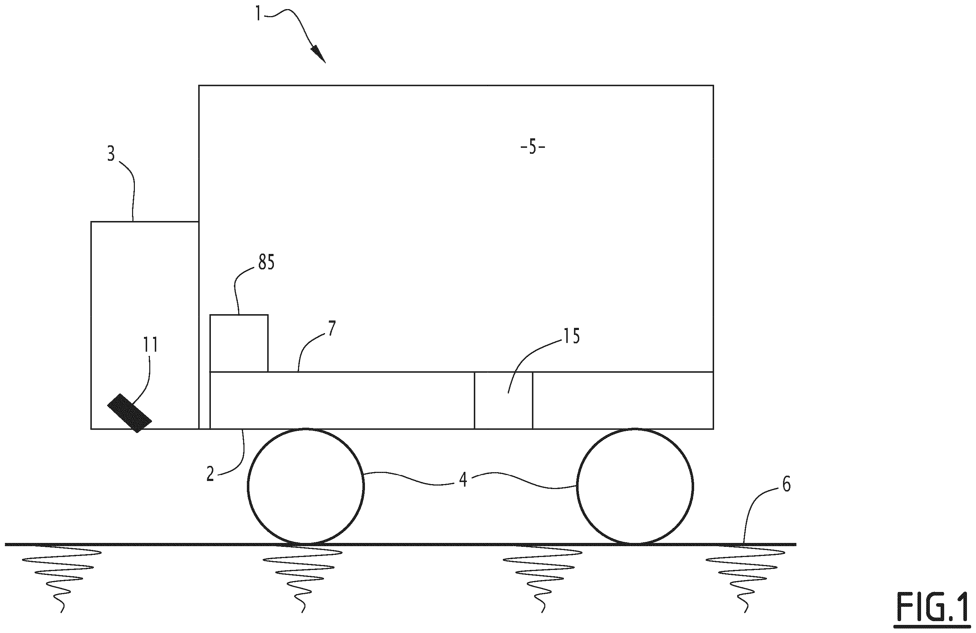

Figure 1 depicts a vehicle 1, comprising a frame 2, a driving cabin 3, wheels 4, a load compartment 5 and a driveline 7, according to an embodiment of the invention.

The driving cabin 3 is supported by the frame 2 and positioned at the front of the vehicle 1. The vehicle 1 is drivable by a driver. The driver inside the driving cabin 3 controls the vehicle 1.

The driving cabin 3 comprises a pedal 11. The pedal 11 tilts in different positions when the driver presses the pedal 11 with his foot.

Products can be stored in the load compartment 5 to be carried from one place to another. The load compartment 5 is supported by the frame 2 and positioned at the back of the vehicle 1. In a variant, not shown, the load compartment 5 is supported by a second frame, hooked to the frame 2.

The wheels 4 are mounted on the frame 2 and configured to rotate to enable the movement of the vehicle 1 on a road 6.

The driveline 7 comprises an internal combustion engine 15. The internal combustion engine 15 comprises a non-represented output shaft, which rotates when the internal combustion engine 15 is actuated. The rotation of the output shaft rotates the wheels 4.

The driveline 7 provides a propulsion force to the vehicle 1 to propel the vehicle 1. The propulsion force is the result of a mechanical transformation by the driveline 7 of a torque provided by the internal combustion engine 15 to the output shaft.

The driver requests a requested propulsion force by pressing the pedal 11. In other terms, the driver pressing the pedal 11, requests a requested torque from the internal combustion engine 15.

The internal combustion engine 15 comprises a combustion chamber 20 configured to receive fuel, preferably gaseous fuel, preferably gaseous hydrogen. The combustion chamber 20 comprises an air inlet orifice 23 connecting the combustion chamber to an outside of the combustion chamber 20. The air inlet 23 is configured to provide air into the combustion chamber 20 and to expel products of a fuel combustion outside the combustion chamber 20. The internal combustion engine 15 also comprises a piston 25 mounted in the combustion chamber 20 and configured to reciprocate with respect to the combustion chamber 20. More precisely, the piston 25 is in translation with respect to the combustion chamber 20 between a top end 30 of the combustion chamber 20 and a bottom end 35 of the combustion chamber 20. A position of the piston 25 in the combustion chamber 20 defines a volume 40. More precisely, the volume 40 is defined between the top end 30 and the piston 25.

During the use of the internal combustion engine 15, the internal combustion engine 15 executes a four-stroke cycle in a repeated manner. The cycle comprises an intake stroke, wherein the piston 25 is displaced in translation in the combustion chamber 20 towards the bottom end 35 so that the volume 40 increases and the pressure in the volume 40 decreases so that fuel is sucked into the volume 40. The cycle then comprises a compression stroke, wherein the piston 25 is translated towards the top end 40, reducing the volume 40 and increasing the pressure in the volume 40. The cycle then comprises an expansion stroke wherein the piston 25 is translated towards the bottom end 35 due to the combustion of the fuel. The cycle comprises then an exhaust stroke wherein the piston is translated towards the top end 30 and products of the fuel combustion are ejected from the combustion chamber 20 through the air inlet orifice 23.

The internal combustion engine 15 comprises a fuel injection system 45. The fuel injection system 45 comprises a first fuel injector 50 configured to be connected to a high-pressure fuel source 53 of the fuel injection system 45, a second fuel injector 55 configured to be connected to a low-pressure fuel source 57 of the fuel injection system 45 and an intake pre-chamber 60, configured to receive fuel injected by the first fuel injector 50 and fuel injected by the second fuel injector 55.

The fuel injection system 45 comprises an intake nozzle 65, configured to receive fuel from the intake pre-chamber 60 and to inject said fuel in the combustion chamber 20. In other terms, the intake nozzle connects fluidly the intake pre-chamber 60 and the combustion chamber 20.

The fuel injection system 45 comprises a spark plug 70 positioned inside the intake pre-chamber 60, configured for igniting, by a plasma discharge, the fuel injected by the first fuel injector 50 or the second fuel injector 55.

Advantageously, the fuel injection system 45 comprises several gaseous fuel reservoirs 75. In this example, the fuel injection system 45 comprises five gaseous fuel reservoirs 75. The gaseous fuel reservoirs 75 are filled with gaseous fuel under pressure. Advantageously, the gaseous fuel reservoirs 75 are hydrogen reservoirs.

Each of the gaseous fuel reservoirs 75 is connected to the high-pressure fuel source 53 and to the low-pressure fuel source 57, so as to feed either the high-pressure fuel source 53 or the low-pressure fuel source 57 with fuel, depending on the fuel pressure available in the considered fuel reservoir 75. More precisely, the fuel injection system 45 comprises a distributor 80 configured to distribute fuel from the gaseous fuel reservoirs 75 to the high-pressure fuel source 53 and the low-pressure fuel source 57 depending on the pressure of the fuel in each gaseous fuel reservoirs 75. In other terms, each gaseous fuel reservoir 75, among the gaseous fuel reservoirs 75, which contains gaseous fuel at a pressure over a predetermined pressure threshold, feeds fuel to the high-pressure fuel source 53 via the distributor 80 and each gaseous fuel reservoir 75, among the gaseous fuel reservoirs 75, which contains gaseous fuel at a pressure under the predetermined pressure threshold, feeds fuel to the low-pressure fuel source 57 via the distributor 80. During use, a single of the reservoirs 75 may successively feed the high-pressure fuel source 53 and the low-pressure fuel source 57 if the pressure in said reservoir 75 drops, e.g. by consumption of the fuel contained therein. When the pressure in this reservoir 75 rises up again over the threshold, e.g. by refueling of the vehicle 1, said reservoir 75, that was feeding the low-pressure fuel source 57, feeds again the high-pressure fuel source 53. Directing the fuel from the reservoir 75 to the sources 53 and 57 is carried out by the distributor 80. To that end, for example, the distributor 80 comprises, for each reservoir 75, one or more valves which switches between the two sources 53 and 57, depending on the value of the fuel pressure in the reservoir 75 relative to the pressure threshold.

In a variant, not represented, there are a pressure regulator installed downstream the distributor 80 to control fuel pressure for the first fuel injector 50 and another pressure regulator for the second fuel injector 55.

Advantageously, the pressure threshold is comprised between 250 and 320 bar.

The fuel injection system 75 comprises a controller 85 connected to the first fuel injector 50, to the second fuel injector 55, and to the spark plug 70, the controller 85 being configured to control the fuel injection system 75. As a general matter, the controller 85 may be a computer or computing system, or similar electronic computing device adapted to manipulate and/or transform parameter represented as physical, such as electronic, quantities within the computing system's registers and/or memories into other parameter similarly represented as physical quantities within the computing system's memories, registers or other such information storage, transmission or display devices.

The controller 85 preferably comprises a processing unit. The terms "processing unit" as disclosed herein should be broadly construed to include any kind of electronic device with data processing circuitry, which includes for example a computer processing device operatively connected to a computer readable medium: e.g. digital signal processor (DSP), a microcontroller, a field programmable gate array (FPGA), and an application specific integrated circuit (ASIC), capable of executing various data processing operations.

It can encompass a single processor or multiple processors, which may be located in the same geographical zone or may, at least partially, be located in different zones and may be able to communicate together.

The computer readable medium is a medium that can be read by the processing unit. The computer readable medium is a medium suitable for storing electronic instructions, and capable of being coupled to a computer system bus.

Such computer readable storage medium is, for instance, a disk, a floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

A computer program is stored in the computer readable storage medium. The computer program comprises one or more stored sequence of program instructions.

The computer program is loadable into the processing unit and adapted to cause execution of a charging method when the computer program is run by the processing unit. The controller 85 is configured to execute a fuel injection method. The fuel injection method comprises controlling a fuel injection by the first fuel injector 50 into the intake pre-chamber 60, a fuel injection by the second fuel injector 55, and fuel ignition by the spark plug into the intake pre-chamber 60, as a function of the requested torque for the internal combustion engine 15 and as a function of an availability of fuel at the high-pressure fuel source 53 and at the low-pressure fuel source 57. The availability of fuel at the high-pressure fuel source 53 and the low-pressure fuel source 57 depends on the pressure of fuel in the gaseous fuel reservoirs 75. At the beginning of a journey of the vehicle 1, all the gaseous fuel reservoirs 75 are filled with fuel and the pressure of the fuel in each gaseous fuel reservoir 75 is above the pressure threshold, so that the distributor 80 distributes fuel only to the high-pressure fuel source 53 and does not distribute fuel from the gaseous fuel reservoirs 80 to the low-pressure fuel source 57 and no fuel is available at the low-pressure fuel source 57. During the journey, fuel from the gaseous fuel reservoirs 75 is injected to the intake pre-chamber 60 and the pressure of fuel in one or more of the gaseous fuel reservoirs 75 decreases, up to a point where the fuel pressure in one or more of the fuel tanks 75 drops below the pressure threshold. At that point, the distributor 80 feeds the high-pressure fuel source 53 with fuel from the reservoirs 75 still at high pressure and simultaneously feeds the low-pressure fuel source 57 with fuel from the reservoirs 75 for which the fuel pressure dropped below the threshold. During the journey, the fuel pressure of each reservoir 75 may drop below the threshold. In that case, the distributor feeds fuel from all the reservoirs 75 to the low-pressure fuel source 57 and fuel is available at the low-pressure fuel source 57, while no fuel is available at the high-pressure source 53. In other terms, the pressure in each gaseous fuel reservoir 75 is proportional to a level of fuel in the gaseous fuel reservoir 75 and the availability of fuel at the high-pressure fuel source 53 and at the low-pressure fuel source 57 depends on the levels of fuel in the gaseous fuel reservoirs 75.

Advantageously, when the requested torque is in a high load range and fuel is available at the high-pressure fuel source 53, fuel is injected from the first fuel injector 50 in a power quantity while no fuel or a pre-igniting quantity of fuel is injected by the second fuel injector 55. In this example, a pre-igniting quantity of fuel is a quantity that is less than 50%, preferably less than 30%, more preferably less than 10% of the total fuel quantity injected per cycle, the total fuel quantity being the addition of the power quantity and the pre-igniting quantity. In this case, when no fuel is available at the low-pressure source 57, no fuel is injected by the second fuel injector 55. In this case, when fuel is available at the low-pressure source 57, no fuel, or the pre-igniting quantity of fuel, is injected by the second fuel injector 55. The pre-igniting quantity is inferior to the power quantity. The pre-igniting quantity is used only to start the ignition of the power quantity of fuel injected later. In contrast, the power quantity of fuel is adapted to power the internal combustion engine 15, in particular for pushing the piston 25 at the expansion stroke.

Advantageously, during the intake stroke or at the beginning of the compression stroke of the internal combustion engine 15, the pre-igniting quantity of fuel is injected in the intake pre-chamber 60 by the second fuel injector 55 if fuel is available at the low-pressure fuel source 57 or by the first fuel injector 50 if fuel is not available at the low-pressure fuel source 57. At the end of the compression stroke, fuel in the intake pre-chamber 60 is ignited by the spark plug 70 and the first fuel injector 50 injects the power quantity of fuel at high pressure in the intake pre-chamber 60. The fuel injected by the first fuel injector 50 is at high-pressure and the conditions in the intake pre-chamber 60, due to the ignition of the pre-igniting quantity of fuel injected during the intake stroke or at the beginning of the compression stroke and due to the compression stroke, are ripe for ignition of the power quantity of fuel injected by the first fuel injector 50 at the end of the compression stroke. The ignition of the power quantity of fuel injected by the first fuel injector 50 at the end of the compression stroke releases energy and drives the expansion strokes. In other terms, the pre-igniting quantity of fuel injected during the intake stroke or at the beginning of the compression stroke is only injected to ignite the power quantity of fuel injected at high pressure at the end of the compression stroke.

Advantageously, when the requested torque is in a low load range and fuel is available at the second fuel source 57, a power quantity of fuel is injected from the second fuel injector 55 while no fuel is injected by the first fuel injector 50.

More precisely, during the intake stroke or at the beginning of the compression stroke of the internal combustion engine 15, the power quantity of fuel is injected in the intake pre-chamber 60 by the second fuel injector 55. Besides, air is sucked by the combustion chamber 20 through the inlet air orifice 23 during the intake stroke. The intake nozzle 65 allows an air flow from the combustion chamber 20 and the intake pre-chamber 60 so that air is mixed with fuel in the intake pre-chamber 60. At the end of the compression stroke, fuel mixed with air in the intake pre-chamber 60 is ignited by the spark plug 70 releasing energy to drive the expansion stroke. In other terms, no fuel is injected by the first fuel injector 50 at the end of the compression stroke and the expansion stroke is driven by the energy released mainly by the ignition of the fuel injected from the second fuel injector 55 but also to less extent from the volumetric gas flow from the first injector. Less energy is released than when fuel is injected from the first fuel injector 50 but it is enough to drive the internal combustion engine 15 with a torque in a low load range.

Thanks to the invention, the fuel from the high-pressure fuel source 53 is saved when the requested torque is in a low load range. In other terms, when the requested torque is in a low load range, gaseous fuel reservoirs 75 with a pressure over the pressure threshold are not used and the pressure in these gaseous fuel reservoirs 75 is saved. Besides, this invention enables use of the fuel in the gaseous fuel reservoirs 75 with a pressure under the pressure threshold and enables full use of the fuel filled in the gaseous fuel reservoirs 75 at the beginning of the journey.

When the requested torque is in the low load range and fuel is not available at the low-pressure fuel source 57, the controller 85 controls the fuel injection system 45 as the same way as when the torque is in a high load range and fuel is available in the high-pressure fuel source 53 but the first fuel injector 50 injects less fuel at the end of the compression stroke to release less energy.

Advantageously, when the requested torque is in a medium load range and fuel is available at the high-pressure fuel source 53 and at the low-pressure fuel source 57, a ratio of the fuel injection by the first fuel injector 50 over the fuel injection by the second fuel injector 55 is a function of the requested torque, the higher the requested torque, the higher the ratio. More precisely, fuel is injected in a power quantity from the second fuel injector 55 during the intake stroke or at the beginning of the compression stroke and mixed with air. Then the fuel is ignited at the end of the compression stroke to release energy to drive the expansion stroke and another power quantity of fuel is injected in addition from the first fuel injector 50 at the end of the compression stroke, the fuel added from the first fuel injector 50 being automatically ignited and releasing energy to drive the expansion stroke. In other terms, when the requested torque is in a medium load range, the energy to drive the expansion stroke is released by the ignition of the fuel injected by the second fuel injector 55 and the fuel injected by the first fuel injector 50, the amount of energy released depending on the ratio.

Thanks the invention, the fuel from the high-pressure fuel source 53 is saved when the requested torque is in a medium load range. In other terms, when the requested torque is in a medium load range, gaseous fuel reservoirs 75 with a pressure above the pressure threshold are less used and are deputized by the gaseous fuel reservoirs 75 with a pressure under the pressure threshold so that the pressure in the gaseous fuel reservoirs 75 with a pressure above the pressure threshold is saved. Besides, this invention enables use of the fuel in the gaseous fuel reservoirs 75 with a pressure under the pressure threshold and enables full use of the fuel filled in the gaseous fuel reservoirs 75 at the beginning of the journey.

When the requested torque is in the medium load range and fuel is not available at the low-pressure fuel source 57, the controller 85 controls the fuel injection system 45 as the same way as when the torque is in a high load range and fuel is available at the high-pressure fuel source 53 but the first fuel injector 50 injects less fuel at the end of the compression stroke to release less energy.

When fuel is not available at the high-pressure fuel source 53 and when the requested torque is in a medium or high load range, the controller 57 controls the fuel injection system 45 as the same way as when the torque is in a low load range and fuel is available at the low-range pressure source 57. In other terms, the controller 57 controls the fuel injection system 45 in a downgraded mode but enables a use of the fuel still available at the low-pressure fuel source 57.

Advantageously, the method comprises distributing fuel from the gaseous fuel reservoirs 75 to the high-pressure fuel source 53 and to the low-pressure fuel source 57 by means of the distributor 80, so that each gaseous fuel reservoir 75, among the gaseous fuel reservoirs 75, which contains gaseous fuel at a pressure over the predetermined pressure threshold, feeds fuel to the high-pressure fuel source 53 via the distributor 80; and each gaseous fuel reservoir 75, among the gaseous fuel reservoirs 75, which contains gaseous fuel at a pressure under the predetermined pressure threshold, feeds fuel to the low-pressure fuel source 57 via the distributor 80. More precisely, the controller 85 commands the distributor 80 so that the high-pressure fuel source 53 is fed by a same gaseous fuel reservoir 75 until the pressure in this gaseous fuel reservoir 75 decreases under the pressure threshold. Besides the controller 85 commands the distributor 80 so that the low-pressure fuel source 57 is fed by a same gaseous fuel reservoir 75 until the gaseous fuel reservoir 75 is empty. In other terms, the gaseous fuel reservoirs 75 are used to feed the fuel sources 53 and 57 one by one.

In a variant, not represented, there is a pressure regulator installed from the distributor to the first injector and another pressure regulator, set to a lower pressure to the second injector. The purpose of these pressure regulators is to simplify injector control. The regulators may use fixed outlet pressure or controllable outlet pressure by the controller 85.

In a variant, not represented, the controller 85 controls the fuel injection by the first fuel injector 50 into the intake pre-chamber 60 and the fuel injection by the second fuel injector 55 into the intake pre-chamber 60, and the plasma discharge by the spark plug 70, as a function of one or several quantities relative to the internal combustion engine 15 and/or the road 6.

**Example 1:** A fuel injection system 45, for an internal combustion engine 15, the fuel injection system 45 comprising:
- a first fuel injector 50, configured to be connected to a high-pressure fuel source 53,
- a second fuel injector 55, configured to be connected to a low-pressure fuel source 57,
- an intake pre-chamber 60, configured to receive fuel injected by the first fuel injector 50 and fuel injected by the second fuel injector 55,
- an intake nozzle 65, configured to receive fuel from the intake pre-chamber 60 and to inject said fuel in a combustion chamber 20 of the internal combustion engine 15,
- a spark plug 70 positioned inside the pre-chamber 60 and configured for igniting the fuel injected by the first fuel injector 50 or second fuel injector 55, and
- a controller 85, connected to the first fuel injector 50, to the second fuel injector 55, and to the spark plug 70, for controlling a fuel injection by the first fuel injector 50 into the intake pre-chamber 60, a fuel injection by the second fuel injector 55 into the intake pre-chamber 60, and the spark plug 70, as a function of a requested torque for the internal combustion engine 15 and as a function of an availability of fuel at the high-pressure fuel source 53 and the low-pressure fuel source 57.

**Example 2:** The fuel injection system 45 of the example 1, wherein, in controlling, the controller 85 is configured so that when the requested torque is in a medium load range and fuel is available at the high-pressure fuel source 53 and at the low-pressure fuel source 57, a ratio of the fuel injection by the first fuel injector 50 over the fuel injection of the second fuel injector 55 is a function of the requested torque, the higher the requested torque, the higher the ratio.

**Example 3:** The fuel injection system 45 of any one of the examples 1 or 2, wherein, in controlling, the controller 85 is configured so that:
- when the requested torque is in a high load range and fuel is available at the high-pressure fuel source 53, fuel is injected from the first fuel injector 50 in a power quantity while no fuel or a pre-igniting quantity of fuel is injected by the second fuel injector 55; and
- when the requested torque is in a low load range and fuel is available at the low-pressure fuel source 57, fuel is injected from the second fuel injector 55 in a power quantity while no fuel is injected by the first fuel injector 50

**Example 4:** The fuel injection system 45 of example 3, wherein, in controlling, the controller 85 is configured so that, when the torque request is in the high load range and fuel is available at the high-pressure fuel source 53, the fuel injected by the first fuel injector 50 is injected at an end of a compression stroke of the internal combustion engine 15.

**Example 5:** The fuel injection system 45 of any one of the examples 3 or 4, wherein, in controlling, the controller 85 is configured so that, when the torque request is in the low load range and fuel is available at the low-pressure fuel source 57, the fuel injected by the second fuel injector 55 is injected during an intake stroke or at the beginning of a compression stroke of the internal combustion engine 15 and the spark plug 70 ignites the fuel at the end of the compression stroke of the internal combustion engine 15.

**Example 6:** The fuel injection system 45 of any one of the preceding examples, wherein the fuel injection system 45 further comprises several gaseous fuel reservoirs 75, for feeding the high-pressure fuel source 53 and the low-pressure fuel source 57 with fuel.

**Example 7:** The fuel injection system 45 of the example 6, wherein the fuel injection system 75 comprises a fuel distributor 80, connected to the gaseous fuel reservoirs 75, the high-pressure fuel source 53 and the low-pressure fuel source 57, for distributing fuel from the gaseous fuel reservoirs 75 to the high-pressure fuel source 53 and the low-pressure fuel source 57, so that:
- each gaseous fuel reservoir 75, among the gaseous fuel reservoirs 75, which contains gaseous fuel at a pressure over a predetermined pressure threshold, feeds fuel to the high-pressure fuel source 53 via the distributor 80; and
- each gaseous fuel reservoir 75, among the gaseous fuel reservoirs 75, which contains gaseous fuel at a pressure under the predetermined pressure threshold, feeds fuel to the low-pressure fuel source 57 via the distributor 80 .

**Example 8:** The fuel injection system 45 of any one of the examples 6 or 7, wherein the pressure threshold is comprised between 250 and 320 bar.

**Example 9:** The fuel injection system 45 of any one of the examples 6 to 8, wherein the gaseous fuel reservoirs 75 are hydrogen reservoirs.

**Example 10:** An internal combustion engine 15, comprising :
- the fuel injection system 45 according to any one of the preceding examples,
- a combustion chamber 20, wherein the intake nozzle 65 opens into the combustion chamber 20 for injecting fuel from the intake pre-chamber 60 into the combustion chamber 20, and
- a piston 25, mounted in the combustion chamber 20 and configured to reciprocate with respect to the combustion chamber 20.

**Example 11:** A vehicle 1, comprising an internal combustion engine 15 according to the example 10.

**Example 12:** A fuel injection method, implemented by the fuel injection system 45 of any one of the examples 1 to 9, the fuel injection method comprising by means of the controller 85, controlling a fuel injection by the first fuel injector 50 into the intake pre-chamber 60 and a fuel injection by the second fuel injector 55 into the intake pre-chamber 60 and the fuel ignition by the spark plug 70, as a function of a requested torque for the internal combustion engine 15 and as a function of the availability of fuel at the high-pressure source 53 and at the low-pressure fuel source 57.

**Example 13:** The fuel injection method of the example 12, wherein the fuel injection system 45 is according to any one of the examples 2 to 5 and wherein controlling comprises that, when the requested torque is in a medium load range and fuel is available at the high-pressure fuel source 53 and the low-pressure fuel source 57, a ratio of the fuel injection by the first fuel injector 50 over the fuel injection of the second fuel injector 55 is a function of the requested torque, the higher the requested torque, the higher the ratio.

**Example 14:** The fuel injection method of any one of the examples 12 or 13, wherein the fuel injection system 45 is according to any one of the examples 3 to 5 and wherein controlling comprises that:
- when the requested torque is in a high load range and fuel is available at the high-pressure fuel source 53, fuel is injected from the first fuel injector 50 in the power quantity while no fuel or the pre-igniting quantity of fuel is injected by the second fuel injector 55; and
- when the requested torque is in a low load range and fuel is available at the low-pressure fuel source 57, fuel is injected from the second fuel injector 55 the power quantity while no fuel is injected by the first fuel injector 50

**Example 15:** The fuel injection method of the example 14, wherein the fuel injection system 45 is according to any one of the examples 4 or 5 and wherein controlling comprises that when the torque request is in the high load range and fuel is available at the high-pressure fuel source 53, the fuel injected by the first fuel injector 50 is injected at the end of the compression stroke of the internal combustion engine 15.

**Example 16:** The fuel injection method of any one of the examples 14 or 15, wherein the fuel injection system 45 is according to any one of the examples 5 to 9 and wherein controlling comprises that, when the torque request is in the low load range and fuel is available at the low-pressure fuel source 57, the fuel injected by the second fuel injector 55 is injected during the intake stroke or at the beginning of a compression stroke of the internal combustion engine 15 and the spark plug 70 ignites the fuel at the end of the compression stroke of the internal combustion engine 15.

**Example 17:** The fuel injection method of any one of the examples 12 to 16, wherein the fuel injection system 45 is according to the example 7, wherein the method comprises distributing fuel from the gaseous fuel reservoirs 75 to the high-pressure fuel source 53 and to the low-pressure fuel source 57 by means of the distributor 80, so that:
- each gaseous fuel reservoir 75, among the gaseous fuel reservoirs 75, which contains gaseous fuel at a pressure over the predetermined pressure threshold, feeds fuel to the high-pressure fuel source 53 via the distributor 80; and
- each gaseous fuel reservoir 75, among the gaseous fuel reservoirs 75, which contains gaseous fuel at a pressure under the predetermined pressure threshold, feeds fuel to the low-pressure fuel source 57 via the distributor 80.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A fuel injection system (45), for an internal combustion engine (15), the fuel injection system (45) comprising:
- a first fuel injector (50), configured to be connected to a high-pressure fuel source (53),
- a second fuel injector (55), configured to be connected to a low-pressure fuel source (57),
- an intake pre-chamber (60), configured to receive fuel injected by the first fuel injector (50) and fuel injected by the second fuel injector (55),
- an intake nozzle (65), configured to receive fuel from the intake pre-chamber (60) and to inject said fuel in a combustion chamber (20) of the internal combustion engine (15),
- a spark plug (70) positioned inside the pre-chamber (60) and configured for igniting the fuel injected by the first fuel injector (50) or second fuel injector (55), and
- a controller (85), connected to the first fuel injector (50), to the second fuel injector (55) and to the spark plug (70), for controlling a fuel injection by the first fuel injector (50) into the intake pre-chamber (60), a fuel injection by the second fuel injector (55) into the intake pre-chamber (60), and the spark plug (70), as a function of a requested torque for the internal combustion engine (15) and as a function of an availability of fuel at the high-pressure fuel source (53) and the low-pressure fuel source (57).

2. The fuel injection system (45) of claim 1, wherein, in controlling, the controller (85) is configured so that:
- when the requested torque is in a high load range and fuel is available at the high-pressure fuel source (53), fuel is injected from the first fuel injector (50) in a power quantity while no fuel or a pre-igniting quantity of fuel is injected by the second fuel injector (55); and
- when the requested torque is in a low load range and fuel is available at the low-pressure fuel source (57), fuel is injected from the second fuel injector (55) in a power quantity while no fuel is injected by the first fuel injector (50).

3. The fuel injection system (45) of claim 2, wherein, in controlling, the controller (85) is configured so that, when the torque request is in the high load range and fuel is available at the high-pressure fuel source (53), the fuel injected by the first fuel injector (50) is injected at an end of a compression stroke of the internal combustion engine (15).

4. The fuel injection system (45) of any one of claim 2 or 3, wherein, in controlling, the controller (85) is configured so that, when the torque request is in the low load range and fuel is available at the low-pressure fuel source (57), the fuel injected by the second fuel injector (55) is injected during an intake stroke or at the beginning of a compression stroke of the internal combustion engine (15) and the spark plug (70) ignites the fuel at the end of the compression stroke of the internal combustion engine (15).

5. The fuel injection system (45) of any one of the preceding claims, wherein the fuel injection system (45) further comprises several gaseous fuel reservoirs (75), for feeding the high-pressure fuel source (53) and the low-pressure fuel source (57) with fuel.

6. The fuel injection system (45) of claim 5, wherein the fuel injection system (75) comprises a fuel distributor (80), connected to the gaseous fuel reservoirs (75), the high-pressure fuel source (53) and the low-pressure fuel source (57), for distributing fuel from the gaseous fuel reservoirs (75) to the high-pressure fuel source (53) and the low-pressure fuel source (57), so that:
- each gaseous fuel reservoir (75), among the gaseous fuel reservoirs (75), which contains gaseous fuel at a pressure over a predetermined pressure threshold, feeds fuel to the high-pressure fuel source (53) via the distributor (80); and
- each gaseous fuel reservoir (75), among the gaseous fuel reservoirs (75), which contains gaseous fuel at a pressure under the predetermined pressure threshold, feeds fuel to the low-pressure fuel source (57) via the distributor (80).

7. The fuel injection system (45) of any one of claims 5 or 6, wherein the pressure threshold is comprised between 250 and 320 bar.

8. An internal combustion engine (15), comprising :
- the fuel injection system (45) according to any one of the preceding claims,
- a combustion chamber (20), wherein the intake nozzle (65) opens into the combustion chamber (20) for injecting fuel from the intake pre-chamber (60) into the combustion chamber (20), and
- a piston (25), mounted in the combustion chamber (20) and configured to reciprocate with respect to the combustion chamber (20).

9. A vehicle (1), comprising an internal combustion engine (15) according to claim 8.

10. A fuel injection method, implemented by the fuel injection system (45) of any one of claims 1 to 7, the fuel injection method comprising by means of the controller (85), controlling a fuel injection by the first fuel injector (50) into the intake pre-chamber (60) and a fuel injection by the second fuel injector (55) into the intake pre-chamber (60) and the fuel ignition by the spark plug (70), as a function of a requested torque for the internal combustion engine (15) and as a function of the availability of fuel at the high-pressure source (53) and at the low-pressure fuel source (57).

11. The fuel injection method of claim 10, wherein controlling comprises that, when the requested torque is in a medium load range and fuel is available at the high-pressure fuel source (53) and the low-pressure fuel source (57), a ratio of the fuel injection by the first fuel injector (50) over the fuel injection of the second fuel injector (55) is a function of the requested torque, the higher the requested torque, the higher the ratio.

12. The fuel injection method of any one of claims 10 or 11, wherein the fuel injection system (45) is according to any one of claims 2 to 4 and wherein controlling comprises that:
- when the requested torque is in a high load range and fuel is available at the high-pressure fuel source (53), fuel is injected from the first fuel injector (50) in the power quantity while no fuel or the pre-igniting quantity of fuel is injected by the second fuel injector (55); and
- when the requested torque is in a low load range and fuel is available at the low-pressure fuel source (57), fuel is injected from the second fuel injector (55) in the power quantity while no fuel is injected by the first fuel injector (50).

13. The fuel injection method of claim 12, wherein the fuel injection system (45) is according to any one of claims 3 or 4 and wherein controlling comprises that when the torque request is in the high load range and fuel is available at the high-pressure fuel source (53), the fuel injected by the first fuel injector (50) is injected at the end of the compression stroke of the internal combustion engine (15).

14. The fuel injection method of any one of claims 12 or 13, wherein the fuel injection system (45) is according to claim 4 and wherein controlling comprises that, when the torque request is in the low load range and fuel is available at the low-pressure fuel source (57), the fuel injected by the second fuel injector (55) is injected during the intake stroke or at the beginning of a compression stroke of the internal combustion engine (15) and the spark plug (70) ignites the fuel at the end of the compression stroke of the internal combustion engine (15).

15. The fuel injection method of any one of claims 10 to 14, wherein the fuel injection system (45) is according to claim 6, wherein the method comprises distributing fuel from the gaseous fuel reservoirs (75) to the high-pressure fuel source (53) and to the low-pressure fuel source (57) by means of the distributor (80), so that:
- each gaseous fuel reservoir (75), among the gaseous fuel reservoirs (75), which contains gaseous fuel at a pressure over the predetermined pressure threshold, feeds fuel to the high-pressure fuel source (53) via the distributor (80); and
- each gaseous fuel reservoir (75), among the gaseous fuel reservoirs (75), which contains gaseous fuel at a pressure under the predetermined pressure threshold, feeds fuel to the low-pressure fuel source (57) via the distributor (80).
